(19) Europäisches Patentamt
European Patent Office
Office européen des brevets

(11) **EP 4 703 975 A1**

(12) **EUROPÄISCHE PATENTANMELDUNG**

(43) Veröffentlichungstag:
**04.03.2026 Patentblatt 2026/10**

(21) Anmeldenummer: **24196885.8**

(22) Anmeldetag: **28.08.2024**

(51) Internationale Patentklassifikation (IPC):
**G06N 3/098** (2023.01)

(52) Gemeinsame Patentklassifikation (CPC):
**G06N 3/098**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(71) Anmelder: **Siemens Aktiengesellschaft**
**80333 München (DE)**

(72) Erfinder: **Schall, Daniel**
**2020 Hollabrunn (AT)**

(74) Vertreter: **Siemens Patent Attorneys**
**Postfach 22 16 34**
**80506 München (DE)**

(54) **VERFAHREN UND SYSTEM ZUM BETRIEB EINES TECHNISCHEN GERÄTS**

(57) Computer-implementiertes Verfahren zum Betrieb eines technischen Geräts durch ein Klienten-Server-System, umfassend einen Server (S) und Klienten (C1-C3), welche jeweils mit einem jeweiligen technischen Gerät (TD1-TD3) verbunden sind, wobei das jeweilige technische Gerät (TD1-TD3) einen Leistungsindikator zur Beschreibung der technischen Leistungsfähigkeit in einem vorgegebenen zukünftigen Zeitintervall bereithält, und folgende Schritte ausgeführt werden:
a) Durchführen eines jeweiligen Trainings für ein bereitgestelltes jeweiliges lokales Modell (LM1-LM3) zum Betrieb des jeweiligen technischen Geräts (TD1-TD3) mit zumindest einer Teilmenge aus bereitgestellten Trainings-Daten durch den jeweiligen Klienten (C1-C3), wobei die Größe der zumindest einer Teilmenge aus bereitgestellten Trainings-Daten von dem Leistungsindikator festgelegt ist,
b) Bereitstellen des jeweiligen lokalen Modells (LM1-LM3) an den Server (S), durch den jeweiligen Klienten (C1-C3),
c) Aggregieren der lokalen Modelle (LM1-LM3) zu einem globalen Modell (GM), durch den Server, und Bereitstellen des globalen Modells (GM) an die Klienten (C1-C3),
d) Empfangen des globalen Modells (GM) durch den jeweiligen Klienten (C1-C3) und Aktualisieren des lokalen Modells (LM1-LM3) mithilfe des zuvor empfangenen globalen Modells (GM),
e) Betreiben des technischen Geräts (TD1) mithilfe des zuvor aktualisierten lokalen Modells (LM1-LM3).

## FIG 1

**Beschreibung**

Die Erfindung betrifft ein computer-implementiertes Verfahren zum Betrieb eines technischen Geräts durch ein Klienten-Server-System, umfassend einen Server und Klienten, welche jeweils mit einem jeweiligen technischen Gerät verbunden sind.

In der Industrie Setzen immer mehr Anwendungen auf den Einsatz von künstlicher Intelligent (kurz KI) beziehungsweise maschinellem Lernen, beispielsweise bei der Steuerung oder dem Betrieb von Produktionsanlagen, in der industriellen Bildverarbeitung zur Fehlererkennung oder in der Überwachung von Produktionsprozessen zur Qualitätssicherung oder der prädiktiven Wartung von Anlagen.

Föderiertes Lernen (engl. "federated learning", kurz FL) ist eine Technik des maschinellen Lernens, bei welcher ein KI-Modell über mehrere dezentrale Klienten- oder Edge-Geräte hinweg trainiert, die lokale Datenproben enthalten, ohne diese auszutauschen.

Insbesondere bei industriellen Anwendungen ist der Einsatz von Edge-Anlagen hinsichtlich Anforderungen an Datenschutz und Privatsphäre besonders wichtig.

Um eine gute Leistung eines endgültigen, zentralen ML-Modells sicherzustellen, basiert FL auf einem iterativen Prozess, der in einen atomaren Satz von Klienten-Server-Interaktionen unterteilt ist, der als FL-Runde bezeichnet wird. Jede Runde dieses Prozesses besteht darin, den aktuellen globalen Modellzustand an teilnehmende Edge-Geräte zu übertragen, lokale Modelle auf diesen lokalen Kanten zu trainieren, um einen Satz potenzieller Modellaktualisierungen auf jedem Edge-Gerät zu erzeugen, und dann diese lokalen Aktualisierungen zu einem einzigen globalen Update zu aggregieren und zu verarbeiten und auf das globale Modell anzuwenden.

Das zuvor betrachtete Verfahren geht von synchronisierten Modellaktualisierungen aus. In groß angelegten verteilten Umgebungen können in der Regel Edge-Geräte mit unterschiedlichen Hardwarefunktionen an FL-Runden teilnehmen. Die Geschwindigkeit, mit der das verteilte FL-Training konvergiert, hängt vom langsamsten Klienten-Gerät ab.

Daher kann der gesamte Prozess aufgrund eines einzelnen Geräts verlangsamt werden, das im Vergleich zu seinen Kollegen, die an einem FL-Training teilnehmen, möglicherweise über schlechte Hardwareressourcen verfügt. In der Praxis können FL-Trainings aufgrund langer Reaktionszeiten, Zeitüberschreitungen und der Blockierung von Hardwareressourcen über einen langen Zeitraum fehlschlagen.

Im Stand der Technik wird, insbesondere in verteilten Trainingsszenarien, häufig davon ausgegangen, dass homogene Geräte die gleichen Hardwarefunktionen haben. Dies gilt insbesondere für Cloud-basierte Rechenzentren.

Ferner wird im Stand der Technik durch asynchrones föderiertes Lernen versucht, Klienten-Beiträge einzubeziehen, sobald sie verfügbar sind.

Es ist Aufgabe der Erfindung eine Lösung bereitzustellen, welche die Leistung bei der Anwendung von KI-Modellen von heterogenen Klienten innerhalb eines Klienten-Server-Systems zu verbessern.

Die erfindungsgemäße Aufgabe wird durch ein computer-implementiertes Verfahren zum Betrieb eines technischen Geräts durch ein Klienten-Server-System gelöst, umfassend einen Server und Klienten, welche jeweils mit einem jeweiligen technischen Gerät verbunden sind, wobei das jeweilige technische Gerät einen Leistungsindikator zur Beschreibung der technischen Leistungsfähigkeit in einem vorgegebenen zukünftigen Zeitintervall bereithält, und folgende Schritte ausgeführt werden:

a) Durchführen eines jeweiligen Trainings für ein bereitgestelltes jeweiliges lokales Modell zum Betrieb des jeweiligen technischen Geräts mit zumindest einer Teilmenge aus bereitgestellten Trainings-Daten durch den jeweiligen Klienten, wobei die Größe der zumindest einer Teilmenge aus bereitgestellten Trainings-Daten von dem Leistungsindikator festgelegt ist,

b) Bereitstellen des jeweiligen lokalen Modells an den Server, durch den jeweiligen Klienten,

c) Aggregieren der lokalen Modelle zu einem globalen Modell, durch den Server, und Bereitstellen des globalen Modells an die Klienten,

d) Empfangen des globalen Modells durch den jeweiligen Klienten und Aktualisieren des lokalen Modells mithilfe des zuvor empfangenen globalen Modells,

e) Betreiben des technischen Geräts mithilfe des zuvor aktualisierten lokalen Modells.

Dadurch kann erreicht werden, dass die Trainingszeit für das globale Modell reduziert und die Verfügbarkeit des gesamten heterogenen Systems verbessert wird.

Es kann somit die Leistungsfähigkeit eines Systems mit heterogenen Klienten verbessert werden.

Der Leistungsindikator beschreibt beispielsweise die Rechengeschwindigkeit und/oder die Latenz und/oder die absolute Rechenzeit der Berechnung, das heißt des jeweiligen Trainings oder einer Trainings-Epoche des lokalen Modells.

In einer Weiterbildung der Erfindung ist es vorgesehen, dass der Leistungsindikator einen technischen Parameter umfasst, welcher die technische Leistungsfähigkeit in Form der Rechenleistung und/oder der Speicherleistung und/oder der Kommunikationsleistung des jeweiligen Klienten beschreibt.

Dadurch kann erreicht werden, dass die Leistungsfähigkeit einzelner Klienten im System individuell berücksichtigt wird und die Leistungsfähigkeit des Gesamtsystems durch einzelne langsame beziehungsweise im Vergleich zu anderen Klienten nicht so performanten Klienten nicht beeinträchtigt wird und Leerlaufprozesse im System vermieden werden oder reduziert können.

In einer Weiterbildung der Erfindung ist es vorgesehen, dass der Leistungsindikator einen zeitlichen Parameter umfasst, welcher die zukünftige zeitliche Verfügbarkeit der technischen Parameter beschreibt.

Durch eine Prognose auf die zukünftige Verfügbarkeit einzelner Klienten kann erreicht werden, dass die zeitliche Leistungsfähigkeit einzelner Klienten im System individuell berücksichtigt wird und die Leistungsfähigkeit des Gesamtsystems durch einzelne langsame beziehungsweise im Vergleich zu anderen Klienten nicht so performanten Klienten nicht beeinträchtigt wird und Leerlaufprozesse im System vermieden werden oder reduziert können.

In einer Weiterbildung der Erfindung ist es vorgesehen, dass die zukünftige zeitliche Verfügbarkeit der technischen Parameter aufgrund der vergangenen Verfügbarkeit hinsichtlich der technischen Parameter des jeweiligen Klienten beschreibt.

Dadurch kann auf einfache Weise eine Prognose auf die zukünftige Verfügbarkeit einzelner Klienten durchgeführt werden.

In einer Weiterbildung der Erfindung ist es vorgesehen, dass der Leistungsindikator eine Mindestgröße für die Größe der zumindest einer Teilmenge aus bereitgestellten Trainings-Daten für den jeweiligen Klienten umfasst.

Dadurch kann erreicht werden, dass auch langsame Klienten im System berücksichtigt werden und von schnelleren Klienten nicht unterdrückt werden.

Die erfindungsgemäße Aufgabe wird auch durch ein Klienten-Server-System zum Betrieb eines technischen Geräts gelöst, wobei das System einen Server und Klienten aufweist, welche Klienten jeweils mit jeweiligen technischen Geräten verbunden sind, und das erfindungsgemäße Verfahren ausgeführt wird.

Die erfindungsgemäße Aufgabe wird auch durch ein Computer-Programm-Produkt mit darin gespeicherten maschinenlesbaren Anweisungen gelöst, die, wenn sie von dem erfindungsgemäßen Klienten-Server-System ausgeführt werden, dieses veranlassen, das erfindungsgemäße Verfahren auszuführen.

In den nachfolgenden Zeichnungen wird die Erfindung anhand eines Ausführungsbeispiels näher beschrieben. In den Figuren zeigt

Fig. 1 ein Ausführungsbeispiel für ein Klienten-Server-System zum Betrieb eines technischen Geräts mit einem Modell auf Basis künstlicher Intelligenz,

Fig. 2 ein Ausführungsbeispiel für das erfindungsgemäße Verfahren als Ablaufdiagramm,

Fig. 3 ein Ausführungsbeispiel für das erfindungsgemäße Verfahren als Algorithmus in Form eines Pseudocodes.

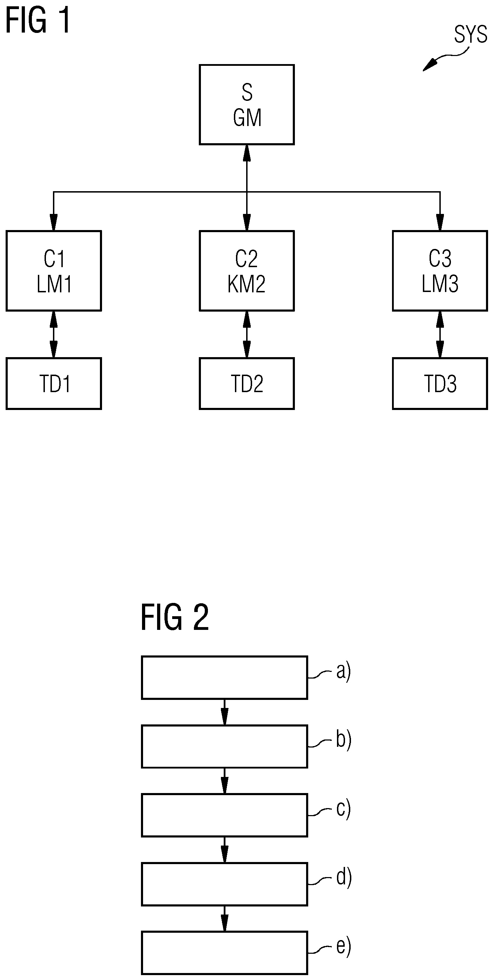

**Fig. 1** zeigt ein Ausführungsbeispiel für ein Klienten-Server-System SYS zum Betrieb eines technischen Geräts TD1 mit einem Modell LM1 auf Basis künstlicher Intelligenz.

Das System SYS weist einen Server S und drei Klienten C1-C3 auf.

Die jeweiligen Klienten C1-C3 sind jeweils mit einem technischen Geräte TD1-TD3 verbunden.

Es wird das im Weiteren beschriebene Verfahren ausgeführt.

Das technische Gerät TD1-TD3, beispielsweise eine Pumpe, eine Produktionsmaschine, ein Roboter, etc., kann durch umfasste Sensoren Gerätedaten wie Betriebsspannungen, Temperaturen oder Vibrationen erfassen, und diese Gerätedaten durch eine ÜberwachungsVorrichtung mithilfe eines Modells auf Basis künstlicher Intelligenz analysieren, um beispielsweise den laufenden Betrieb zu überwachen.

Das Gerät kann dann durch ein Modell auf Basis künstlicher Intelligenz beispielsweise in Form von Steuersignalen, welche durch das Modell von einer Steuer-Vorrichtung gebildet werden, angesteuert werden.

Das technische Gerät kann beispielsweise auch eine Inspektionsvorrichtung für ein, von einer Produktionsmaschine erzeugtes Produkt, sein, wobei mithilfe bildgebender Sensoren das Produkt erfasst wird und der äußere Zustand analysiert und die Produktionsmaschine dementsprechend von einer Steuer-Vorrichtung angesteuert wird.

Die Steuer-Vorrichtung kann einen Prozessor und einen Speicher aufweisen und mithilfe eines Kommunikations-Moduls die berechneten relevanten Modell-Daten erhalten und weiterverarbeiten.

**Fig. 2** stellt ein Ausführungsbeispiel für das erfindungsgemäße Verfahren als Ablaufdiagramm dar.

Es liegt das System SYS nach der vorhergehenden Figur zugrunde.

Das jeweilige technische Gerät TD1-TD3 hält einen Leistungsindikator zur Beschreibung der technischen Leistungsfähigkeit in einem vorgegebenen zukünftigen Zeitintervall bereit.

Folgende Schritte werden ausgeführt:

a) Durchführen eines jeweiligen Trainings für ein bereitgestelltes jeweiliges lokales Modell LM1-LM3 zum Betrieb des jeweiligen technischen Geräts TD1-TD3 mit zumindest einer Teilmenge aus bereitgestellten Trainings-Daten durch den jeweiligen Klienten C1-C3, wobei die Größe der zumindest einer Teilmenge aus bereitgestellten Trainings-Daten von dem Leistungsindikator festgelegt ist,

b) Bereitstellen des jeweiligen lokalen Modells LM1-LM3 an den Server S, durch den jeweiligen Klienten C1-C3,

c) Aggregieren der lokalen Modelle LM1-LM3 zu einem globalen Modell GM, durch den Server, und Bereitstellen des globalen Modells GM an die Klienten C1-C3,

d) Empfangen des globalen Modells GM durch den jeweiligen Klienten C1-C3 und Aktualisieren des lokalen Modells LM1-LM3 mithilfe des zuvor empfangenen globalen Modells GM,

e) Betreiben des technischen Geräts TD1 mithilfe des zuvor aktualisierten lokalen Modells LM1-LM3.

Der Leistungsindikator umfasst dabei einen technischen Parameter, welcher die technische Leistungsfähigkeit in Form der Rechenleistung und/oder der Speicherleistung und/oder der Kommunikationsleistung des jeweiligen Klienten C1-C3 beschreibt.

Der Leistungsindikator umfasst ferner einen zeitlichen Parameter, welcher die zukünftige zeitliche Verfügbarkeit der technischen Parameter beschreibt.

Die zukünftige zeitliche Verfügbarkeit der technischen Parameter kann dabei aufgrund der vergangenen Verfügbarkeit hinsichtlich der technischen Parameter des jeweiligen Klienten C1-C3 beschrieben werden.

Der Leistungsindikator kann eine Mindestgröße für die Größe der zumindest einer Teilmenge aus bereitgestellten Trainings-Daten für den jeweiligen Klienten C1-C3 umfassen.

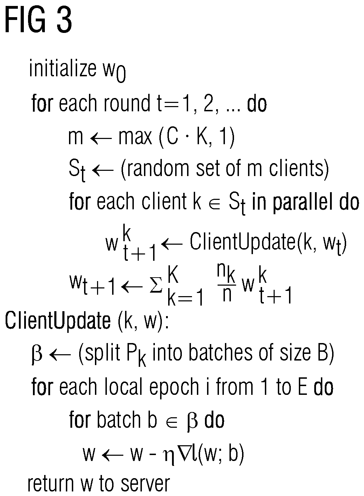

**Fig. 3** zeigt ein Ausführungsbeispiel für das erfindungsgemäße Verfahren als Algorithmus in Form eines Pseudocodes, bei welchem Klienten anhand von der Größe der zumindest einer Teilmenge aus bereitgestellten Trainings-Daten aggregiert werden.

Zur Erreichung einer günstigen gesamten System-Leistung kann der Leistungsindikator auch durch Anwendung eines Optierungs-Ziels zur Durchführung der Berechnung, das heißt des jeweiligen Trainings oder einer Trainings-Epoche des lokalen Modells ausgedrückt und festgelegt werden, beispielsweise eine gewünschte Gesamtzeit, welche so gewählt werden, dass jeder Klient die Möglichkeit hat, mindestens die verarbeitete Mindestzeit zu bestehen.

In einem solchen Szenario kann die gewünschte Gesamtzeit als Median der Gesamtzeit ausgewählt werden, beispielsweise 21 Stunden, was bedeutet, dass der langsamste Klient bis zu 21 Stunden für das Training verwenden kann, was oft nicht ausreicht, um den gesamten Datensatz zu verarbeiten, aber mindestens die minimal verarbeitete Größe der Daten.

Dabei kann zusätzlich die Standardabweichung wird für die Zeit pro Datensatz jedes Klienten angewandt werden, um die gewünschte Gesamtzeit in Kombination mit der Standardabweichung zu minimieren.

Die Batch-Größe des Trainings-Datensatzes kann mit einem Solver und einer Lösungsmethode wie dem Generalisierten reduzierten Gradienten (GRG) berechnet werden. Die GRG-Methode ist eine Erweiterung der Methode mit reduziertem Gradienten, um nichtlineare Ungleichheitsbedingungen zu berücksichtigen. Bei dieser Methode wird eine Suchrichtung gefunden, so dass bei jeder kleinen Bewegung die aktuell aktiven Randbedingungen genau aktiv bleiben.

Basierend auf der Kenntnis der Batchgröße jedes Klienten kann der FL-Server die Gewichtungen in den Verbundmittelungsalgorithmen anpassen. Anstatt die Klienten-Beiträge gleichmäßig zu gewichten, werden die Beiträge von $n_k$ basierend auf der Menge der Trainingsdaten (bzw. Batchgröße) gewichtet, die von jedem Klienten verwendet werden (je mehr Trainingsdaten, desto besser):

$$w_{t+1} \leftarrow \sum_{k=1}^{K} \frac{n_k}{n} w_{t+1}^k$$

mit

$w$ ... Gewicht für einen Klienten bei Aggregation
$n$ ... Beitrag für einen Klienten
$k$ ... Klient
$K$ ... Anzahl an Klienten
$t$ ... Iterations-Runde

Der in der Figur gezeigte erste Teil des Algorithmus wird vom Server ausgeführt und indiziert K Klienten durch den Index $k$.

Der zweite Teil des Algorithmus, welcher eine Aktualisierung durch den Klienten zeigt, wird durch den jeweiligen Klienten $k$ ausgeführt.

Die Größe der zumindest einer Teilmenge des lokalen Trainings wird mit B (engl. "batch") bezeichnet.

Die Anzahl von Epochen des lokalen Trainings wird mit E bezeichnet.

Die Lernrate (engl. "learning rate") des lokalen Trainings wird mit $\eta$ bezeichnet und beschreibt dabei, wie stark das Netz die Gewichtung einzelner Neuronen in Bezug auf erkannte Fehler nach jedem Durchgang anpasst. Die Höhe der Lernrate bestimmt so auch die Dauer des Trainingsprozesses.

*Unabhängig vom grammatikalischen Geschlecht eines bestimmten Begriffes sind Personen mit männlicher, weiblicher oder anderer Geschlechteridentität mit umfasst.*

**Bezugszeichenliste**

| | |
|---|---|
| B | Batch, Teilmengen-Größe |
| C1-C3, *K* | Klient |
| *E* | Trainings-Epoche |
| *k* | Index |
| LM1-LM3 | lokales Modell |
| GM | globales Modell |
| S | Server |
| SYS | Klienten-Server-System |
| TD1-TD3 | technisches Gerät |

η    Trainings-Lernrate

**Patentansprüche**

1. Computer-implementiertes Verfahren zum Betrieb eines technischen Geräts durch ein Klienten-Server-System, umfassend einen Server (S) und Klienten (C1-C3), welche jeweils mit einem jeweiligen technischen Gerät (TD1-TD3) verbunden sind, wobei das jeweilige technische Gerät (TD1-TD3) einen Leistungsindikator zur Beschreibung der technischen Leistungsfähigkeit in einem vorgegebenen zukünftigen Zeitintervall bereithält, und folgende Schritte ausgeführt werden:

   a) Durchführen eines jeweiligen Trainings für ein bereitgestelltes jeweiliges lokales Modell (LM1-LM3) zum Betrieb des jeweiligen technischen Geräts (TD1-TD3) mit zumindest einer Teilmenge aus bereitgestellten Trainings-Daten durch den jeweiligen Klienten (C1-C3), wobei die Größe der zumindest einer Teilmenge aus bereitgestellten Trainings-Daten von dem Leistungsindikator festgelegt ist,
   b) Bereitstellen des jeweiligen lokalen Modells (LM1-LM3) an den Server (S), durch den jeweiligen Klienten (C1-C3),
   c) Aggregieren der lokalen Modelle (LM1-LM3) zu einem globalen Modell (GM), durch den Server, und Bereitstellen des globalen Modells (GM) an die Klienten (C1-C3),
   d) Empfangen des globalen Modells (GM) durch den jeweiligen Klienten (C1-C3) und Aktualisieren des lokalen Modells (LM1-LM3) mithilfe des zuvor empfangenen globalen Modells (GM),
   e) Betreiben des technischen Geräts (TD1) mithilfe des zuvor aktualisierten lokalen Modells (LM1-LM3).

2. Verfahren nach dem vorhergehenden Anspruch, wobei der Leistungsindikator einen technischen Parameter umfasst, welcher die technische Leistungsfähigkeit in Form der Rechenleistung und/oder der Speicherleistung und/oder der Kommunikationsleistung des jeweiligen Klienten (C1-C3) beschreibt.

3. Verfahren nach dem vorhergehenden Anspruch, wobei der Leistungsindikator einen zeitlichen Parameter umfasst, welcher die zukünftige zeitliche Verfügbarkeit der technischen Parameter beschreibt.

4. Verfahren nach dem vorhergehenden Anspruch, wobei die zukünftige zeitliche Verfügbarkeit der technischen Parameter aufgrund der vergangenen Verfügbarkeit hinsichtlich der technischen Parameter des jeweiligen Klienten (C1-C3) beschreibt.

5. Verfahren nach einem der vorhergehenden Ansprüche, wobei der Leistungsindikator eine Mindestgröße für die Größe der zumindest einer Teilmenge aus bereitgestellten Trainings-Daten für den jeweiligen Klienten (C1-C3) umfasst.

6. Klienten-Server-System (SYS) zum Betrieb eines technischen Geräts (TD1) mit einem Server (S) und Klienten (C1-C3), welche jeweils mit jeweiligen technischen Geräten (TD1-TD3) verbunden sind, und das Verfahren nach einem der vorhergehenden Ansprüche ausgeführt wird.

7. Computer-Programm-Produkt mit darin gespeicherten maschinenlesbaren Anweisungen, die, wenn sie von dem Klienten-Server-System (SYS) nach einem der beiden vorhergehenden Ansprüche ausgeführt werden, dieses veranlassen, das Verfahren nach einem der vorhergehenden Ansprüche auszuführen.

# FIG 1

SYS

```
        ┌──────────┐
        │    S     │
        │    GM    │
        └──────────┘
             ↕
   ┌─────────┼──────────────┐
   ↓         ↓              ↓
┌──────┐  ┌──────┐      ┌──────┐
│  C1  │  │  C2  │      │  C3  │
│ LM1  │  │ KM2  │      │ LM3  │
└──────┘  └──────┘      └──────┘
   ↕         ↕              ↕
┌──────┐  ┌──────┐      ┌──────┐
│ TD1  │  │ TD2  │      │ TD3  │
└──────┘  └──────┘      └──────┘
```

# FIG 2

```
┌────────────────────┐
│                    │── a)
└────────────────────┘
          ↓
┌────────────────────┐
│                    │── b)
└────────────────────┘
          ↓
┌────────────────────┐
│                    │── c)
└────────────────────┘
          ↓
┌────────────────────┐
│                    │── d)
└────────────────────┘
          ↓
┌────────────────────┐
│                    │── e)
└────────────────────┘
```

# FIG 3

initialize $w_0$

for each round t=1, 2, ... do

    $m \leftarrow max(C \cdot K, 1)$

    $S_t \leftarrow$ (random set of m clients)

    for each client $k \in S_t$ in parallel do

        $w_{t+1}^k \leftarrow$ ClientUpdate(k, $w_t$)

    $w_{t+1} \leftarrow \Sigma_{k=1}^K \frac{n_k}{n} w_{t+1}^k$

ClientUpdate (k, w):

    $\beta \leftarrow$ (split $P_k$ into batches of size B)

    for each local epoch i from 1 to E do

        for batch $b \in \beta$ do

            $w \leftarrow w - \eta \nabla l(w; b)$

    return w to server

EUROPÄISCHES PATENTAMT / European Patent Office / Office européen des brevets

## EUROPÄISCHER RECHERCHENBERICHT

Nummer der Anmeldung

EP 24 19 6885

### EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | PARK JUWON ET AL: "AMBLE: Adjusting mini-batch and local epoch for federated learning with heterogeneous devices", JOURNAL OF PARALLEL AND DISTRIBUTED COMPUTING., Bd. 170, 28. Juli 2022 (2022-07-28), Seiten 13-23, XP093246418, NL ISSN: 0743-7315, DOI: 10.1016/j.jpdc.2022.07.009 Gefunden im Internet: URL:https://pdf.sciencedirectassets.com/272438/1-s2.0-S0743731522X00105/1-s2.0-S0743731522001757/main.pdf?hash=bceab946d8ddfe0ce7e830961fb1e9132ed6db8a74df78d79752778fbc458f7e&host=68042c943591013ac2b2430a89b270f6af2c76d8dfd086a07176afe7c76c2c61&pii=S0743731522001757&tid=spdf-643688a9-317a-4613-8dba-784> * Seite 13 - Seite 19 * ----- | 1-7 | INV. G06N3/098 |
| A | PRUCKOVSKAJA VIKTORIJA ET AL: "Federated Learning for Predictive Maintenance and Quality Inspection in Industrial Applications", 2023 PROGNOSTICS AND HEALTH MANAGEMENT CONFERENCE (PHM), IEEE, 31. Mai 2023 (2023-05-31), Seiten 312-317, XP034367059, DOI: 10.1109/PHM58589.2023.00064 [gefunden am 2023-06-28] * Zusammenfassung * ----- | 1-7 | **RECHERCHIERTE SACHGEBIETE (IPC)**<br><br>G06N |

Der vorliegende Recherchenbericht wurde für alle Patentansprüche erstellt

| Recherchenort | Abschlußdatum der Recherche | Prüfer |
|---|---|---|
| Den Haag | 4. Februar 2025 | Bohn, Patrice |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...........................................................................
& : Mitglied der gleichen Patentfamilie, übereinstimmendes Dokument

EPO FORM 1503 03.82 (P04C03)